# EUROPÄISCHE PATENTSCHRIFT

(11) **EP 1 910 693 B1**
(45) Veröffentlichungstag und Bekanntmachung des Hinweises auf die Patenterteilung: **28.03.2012**
(21) Anmeldenummer: 06761682.1
(22) Anmeldetag: 22.06.2006
(51) Int. Cl.: F16D 3/68, F16D 21/06

(54) **KUPPLUNGSSYSTEM**
CLUTCH SYSTEM
SYSTEME D'EMBRAYAGE

(30) Priorität: 28.06.2005 DE 102005030503
(43) Veröffentlichungstag der Anmeldung: 16.04.2008
(73) Patentinhaber: Schaeffler Technologies AG & Co. KG, 91074 Herzogenaurach (DE)
(72) Erfinder: ZHOU, Bin, 77815 Bühl (DE)
(86) Internationale Anmeldenummer: PCT/DE2006/001061
(87) Internationale Veröffentlichungsnummer: WO 2007/000140

(56) Entgegenhaltungen:
- EP-A1- 0 223 442
- FR-A- 2 118 762
- JP-A- 59 159 431
- US-A- 1 963 188
- US-A- 2 053 849

## Beschreibung

Die vorliegende Erfindung betrifft ein Kupplungsaggregat gemäß dem Oberbegriff des Patentanspruchs 1.

Das Kupplungsaggregat besteht aus wenigstens zwei Untereinheiten, wobei die eine Untereinheit motorseitig, nämlich an der Abtriebswelle des Motors vormontierbar ist und die andere Untereinheit getriebeseitig vormontierbar ist. Vorzugsweise umfasst die motorseitig vormontierte Untereinheit eine Torsionsschwingungsdämpfungseinrichtung und die getriebeseitig vormontierbare Untereinheit wenigstens eine Reibungskupplung. Derartige Kupplungsaggregate sind beispielsweise durch die DE 10 2005 027 608 und die DE 10 2004 042 640 vorgeschlagen worden.

Ein Kupplungsaggregat gemäß dem Oberbegriff des Patentanspruchs 1 ist aus der US 2,053,849 bekannt.Auch die JP 59159431 ist auf den Oberbegriff des Patentanspruchs 1 lesbar.

Der vorliegenden Erfindung liegt die Aufgabe zugrunde, zwischen den beiden Untereinheiten eines Kupplungsaggregats eine Verbindung zu schaffen, die eine einwandfreie Drehmomentübertragung gewährleistet und durch einfaches, axiales Zusammenfügen der beiden Untereinheiten herstellbar ist. Durch die erfindungsgemäße Verbindung sollen Anschlags- bzw. Klappergeräusche aufgrund von Torsionsschwingungen vermieden werden.

Erfindungsgemäß gelöst wird diese Aufgabe durch ein Kupplungsaggregat gemäß Patentanspruch 1. Die beiden Untereinheiten des Kupplungsaggregats sind über eine axiale Steckverbindung, welche ineinandergreifende Profilierungen und Gegenprofilierungen, insbesondere Verzahnungen, umfasst, miteinander koppelbar. Dadurch wird erzielt, dass die Profilierungen und Gegenprofilierungen in Umfangsrichtung elastisch verspannt und/oder winkelmäßig zueinander positioniert sind. Bei einer elastischen Verspannung der Profilierungen und Gegenprofilierungen sind deren Flanken in einer Relativverdrehrichtung zueinander verspannt. Beim Auftreten von Drehmomentbeanspruchungen infolge von Torsionsschwingungen in die andere Relativverdrehrichtung erfolgt eine Schwingungsfiltrierung bzw. Dämpfung, mittels der die elastische Verspannung bewirkenden Mittel, insbesondere Federspangen. Bei einer winkelmäßigen Positionierung der Profilierungen und Gegenprofilierungen können diese relativ zueinander in einer Lage gehalten werden, die gewährleistet, dass in beide Relativverdrehrichtungen ein, wenn auch geringes, Verdrehspiel zwischen den Profilierungen und Gegenprofilierungen vorhanden ist. Die Überwindung dieses Verdrehspiels kann somit nur entgegen der Wirkung der elastischen Positioniermittel erfolgen.

Bevorzugte Auslführungsbeispiele der vorliegenden Erfindung sind in den abhängigen Ansprüchen dargelegt.

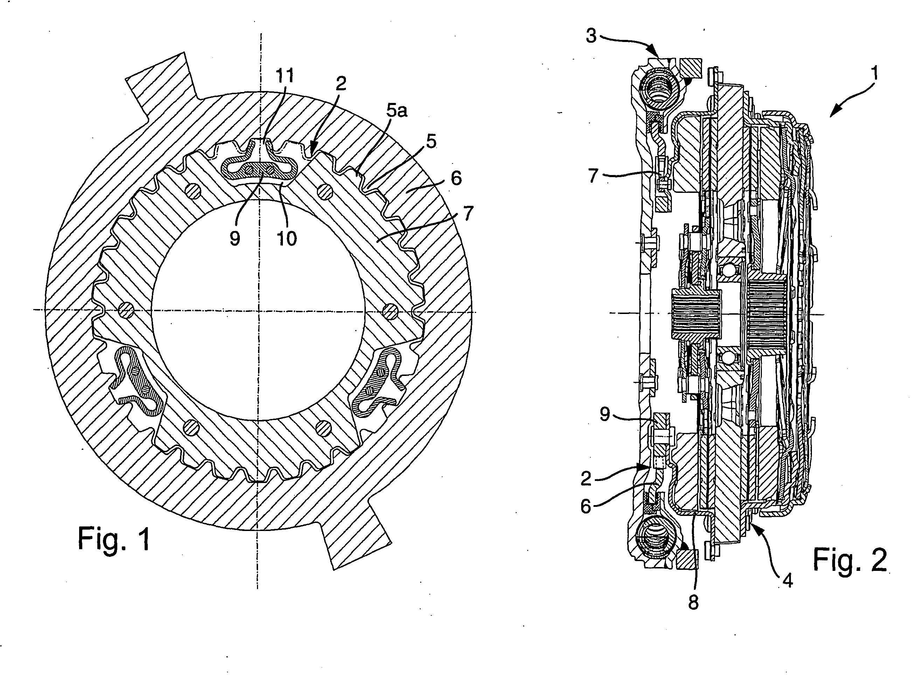

Weitere vorteilhafte bauliche und funktionelle Merkmale werden im Folgenden anhand der Figuren 1 und 2 näher erläutert.

In einem Kupplungssystem 1 wird eine Verzahnungsverbindung 2 zwischen dem Dämpfer 3 und der Kupplung 4 angebracht, mit der die beiden Komponenten getrennt an dem Motor und dem Getriebe montiert und zum Schluss zusammengeführt. Die normalen Verzahlungen 5, 5a ohne Federung bzw. Dämpfung verursachen Geräusche wegen Vibration in den Verzahnungen, insbesondere bei dem Leerlauf- bzw. Creeping-Zustand. Die Aufgabe ist, das Krakeln in den Verzahnungen 5, 5a zu beseitigen, unter der Berücksichtigung, dass die Verzahnungen 5, 5a leicht einführbar sein müssen.

Die Verzahnungen 5, 5a befinden sich in dem Flansch 6 des Dämpfers (Innenverzahnung) und dem Zahnkranz 7 von der Kupplung (Außenverzahnung), der mit dem Kupplungsdeckel 8 vernietet wird. Zwischen den Verzahnungspaaren 5, 5a gibt es fertigungsbedingtes Spiel. Die erfinderische Lösung nutzt dieses Spiel für den Federweg. Als Federelement 9 sind hier mehrere so genannte Federspangen vorgesehen, die in Lücken 10 des Zahnkranzes 7 liegen und auch mit dem Kupplungsdeckel 8 vernietet sind. Die Breite der Federspange 9 ist gleich wie die Lücke 11 der Verzahnung 5 im Flansch 6 und größer als die Zahnbreite des Zahnkranzes 7. Ihre Differenz ist der Federweg. Die Spangen 9 verbiegen sich durch das Außenmoment über den Federweg bis das Verzahnungspaar 5, 5a kontaktiert. Das weitere Moment übernimmt die Verzahnungsverbindung 2.

Vorteile dieser Lösung sind:
a) Die Verzahnungsverbindung 2 ist in beide Richtungen federnd,
b) einfache werkzeugfallende Teile, insbesondere die Spangen 9,
c) Montage ohne zusätzliche axiale Kraft.

Bezüglich des allgemeinen Aufbaues und der Funktionsweise des in der vorliegenden Anmeldung beschriebenen Kupplungsaggregates sowie der Vormontage und des Zusammenbaus der dieses bildenden Untereinheiten, welche einerseits motorseitig und andererseits getriebeseitig vormontierbar sind, wird auf die DE 10 2005 027 608 und insbesondere auf die DE 10 2004 042 640.6 verwiesen. In der letztgenannten Anmeldung ist bereits eine Steckverbindung zwischen einem motorseitig vormontierbaren Dämpfungssystem und einer getriebeseitig vormontierbaren Kupplungsvorrichtung offenbart, wobei die Kupplungsvorrichtung als Zweischeibenkupplung bzw. Doppelkupplung ausgebildet ist.

### Bezugszeichenliste

- 1: Kupplungssystem
- 2: Verzahnungsverbindung
- 3: Dämpfer
- 4: Kupplung
- 5: Verzahnungen
- 5a: Verzahnungen
- 6: Flansch
- 7: Zahnkranz
- 8: Kupplungsdeckel
- 9: Federelement
- 10: Lücken des Zahnkranzes
- 11: Lücke der Verzahnung

## Patentansprüche

1. Kupplungsaggregat, das aus wenigstens zwei Untereinheiten besteht, wobei die eine Untereinheit motorseitig, nämlich an der Abtriebswelle des Motors vormontierbar ist, und die andere Untereinheit getriebeseitig vormontierbar ist, wobei beide Untereinheiten über eine axiale Steckverbindung, die ineinandergreifende Verzahnungen (5, 5a) umfasst, miteinander koppelbar sind, und die ineinandergreifenden Verzahnungen (5, 5a) in Umfangsrichtung elastisch verspannt und/oder winkelmäßig zueinander positioniert sind, **dadurch gekennzeichnet, dass** Federspangen (9) in von zwei benachbarten Zahnflanken definierten Zahnlücken (10) der einen Verzahnung (5a) befestigt sind und in von zwei benachbarten Zahnflanken definierten Zahnlücken (11) der anderen Verzahnung (5) eingreifen.

2. Kupplungsaggregat nach Anspruch 1, **dadurch gekennzeichnet, dass** die Lücken (11) der anderen Verzahnung (5), in die die Federspangen (9) eingreifen, eine größere Breite aufweisen als die Zahnbreite der anderen Verzahnung (5).

3. Kupplungsaggregat nach Anspruch 1 oder 2, **dadurch gekennzeichnet, dass** die Federspangen (9) eine Verdrehsteifigkeit in der Größenordnung zwischen 10 und 60 Nm pro Winkelgrad erzeugen.

## Claims

1. Clutch system which is composed of at least two subunits, wherein the one subunit can be premounted on the engine side, specifically on the output shaft of the engine, and the other subunit can be premounted on the gearbox side, wherein the two subunits can be coupled to one another by means of an axial plug-tight connection which comprises toothing arrangements (5, 5a) which engage one on the other, and the toothing arrangements (5, 5a) which engage one on the other are braced elastically in the circumferential direction and/or are positioned in angular terms with respect to one another, **characterized in that** spring tongues (9) are attached in tooth gaps, defined by two adjacent tooth edges, of the one toothing arrangement (5a), and engage in tooth gaps (11), defined by two adjacent tooth edges, of the other toothing arrangement (5).

2. Clutch system according to Claim 1, **characterized in that** the gaps (11) of the other toothing arrangement (5), in which gaps the spring tongues (9) engage, have a larger width than the tooth width of the other toothing arrangement (5).

3. Clutch system according to Claim 1 or 2, **characterized in that** the spring tongues (9) generate a rotational rigidity of an order of magnitude between 10 and 60 Nm per degree angle.

## Revendications

1. Unité d'embrayage, qui est constituée d'au moins deux sous-ensembles, l'un des sous-ensembles pouvant être prémonté du côté du moteur, à savoir sur l'arbre de sortie du moteur, et l'autre sous-ensemble pouvant être prémonté du côté de la transmission, les deux sous-ensembles pouvant être accouplés l'un à l'autre par l'intermédiaire d'une liaison par emboîtement axiale qui comporte des dentures engrenées (5, 5a), et les dentures engrenées (5, 5a) étant positionnées de manière élastiquement serrée et/ou angulairement l'une par rapport à l'autre dans la direction périphérique, **caractérisée en ce que** des pinces à ressort (9) sont fixées dans des entredents (10) de l'une des dentures (5a) qui sont définis par deux flancs de dent adjacents, et viennent en prise dans des entredents (11) de l'autre denture (5) qui sont définis par des flancs de dent adjacents.

2. Unité d'embrayage selon la revendication 1, **caractérisée en ce que** les entredents (11) de l'autre denture (5), dans lesquels les pinces à ressort (9) viennent en prise, présentent une largeur supérieure à la largeur de dent de l'autre denture (5).

3. Unité d'embrayage selon la revendication 1 ou 2, **caractérisée en ce que** les pinces à ressort (9) produisent une rigidité en torsion de l'ordre de 10 à 60 Nm par degré.
